# FASCICULE DE BREVET EUROPEEN

(11) **EP 1 360 436 B1**
(45) Date de publication et mention de la délivrance du brevet: **17.08.2005**
(21) Numéro de dépôt: 02701369.7
(22) Date de dépôt: 31.01.2002
(51) Int. Cl.: F16L 17/035, F16L 17/073

(54) **GARNITURE D'ETANCHEITE POUR ASSEMBLAGE D'ELEMENTS TUBULAIRES DE CIRCUITS DE FLUIDES**
DICHTUNG FUER DEN ZUSAMMENBAU VON ROHRFOERMIGEN ELEMENTEN VON FLUIDKREISLAEUFEN
SEAL FOR ASSEMBLING FLUID-CIRCUIT TUBULAR ELEMENTS

(30) Priorité: 01.02.2001 FR 0101371
(43) Date de publication de la demande: 12.11.2003
(73) Titulaire: SAINT-GOBAIN PAM, 54000 Nancy (FR)
(72) Inventeur: VITEL, Jean-Pierre, Régniéville, F-54470 Thiaucourt (FR); SCHMUCK, Jean-François, F-54210 Tonnoy (FR); RENARD, Philippe, F-54710 Fleville (FR); LESCOT, Didier, F-54200 Toul (FR)
(86) Numéro de dépôt international: PCT/FR2002/000381
(87) Numéro de publication internationale: WO 2002/061320

(56) Documents cités:
- CH-A- 588 649
- FR-A- 1 149 513
- GB-A- 1 069 239
- US-A- 3 020 054
- US-A- 3 627 335

## Description

La présente invention concerne une garniture d'étanchéité pour étancher, dans un circuit de fluide, un assemblage télescopique entre des régions d'extrémité respectives en relation d'emboîtement mutuel d'un premier et d'un deuxième éléments tubulaires, la région d'extrémité du premier élément dite « bout mâle » présentant une surface extérieure approximativement lisse et celle du deuxième élément dite « emboîture » présentant en vis-à-vis une surface intérieure munie d'une gorge d'ancrage, la garniture étant adaptée pour être insérée et comprimée radialement entre la surface extérieure du bout mâle et la surface intérieure de l'emboîture.

Une telle garniture annulaire peut être mise en oeuvre pour rendre étanche la jonction entre les extrémités respectives emboîtées de deux tuyaux, ou d'un tuyau et d'un manchon d'accouplement, par exemple en fonte, en acier ou en matériau synthétique, et notamment pour étancher l'assemblage d'éléments de canalisation en fonte ductile entrant dans la constitution de réseaux d'adduction d'eau potable ou d'évacuation d'eaux usées.

Pour remédier aux inconvénients des garnitures d'étanchéité comportant un corps adapté pour être inséré et comprimé radialement entre les régions d'extrémité emboîtées de deux éléments tubulaires, et une couronne rigide ou une bague de raidissage extérieure à l'emboîture destinée à prendre appui contre la face frontale de celle-ci pour empêcher l'entraînement de la garniture vers le fond de l'emboîture lors de l'introduction du bout mâle dans cette dernière, et plus particulièrement à leur manque de fiabilité dû à la vulnérabilité de la couronne ou de la bague aux chocs frontaux, on a conçu des garnitures comportant une couronne ou une bague adaptées pour être insérées également entre les régions d'extrémité emboîtées des deux éléments et à cette fin constituées sous la forme d'un talon d'ancrage s'étendant sur une partie de la longueur du corps, en saillie autour de la surface extérieure de celui-ci, adapté pour être inséré dans une gorge d'ancrage creusée dans la surface intérieure de l'emboîture.

Comme la totalité de la garniture doit être insérée entre les deux éléments, celle-ci doit être relativement souple, mais cette souplesse entraîne des risques notables, que le talon échappe à la gorge et que la garniture soit entraînée vers le fond de l'emboîture lors de l'introduction du bout mâle dans cette dernière, ou soit expulsée hors de celle-ci lors de la mise en pression de l'assemblage.

On connaît par exemple une garniture d'étanchéité comportant un corps annulaire déformable élastiquement adapté pour être enfilé autour de la surface extérieure approximativement lisse du bout mâle et un talon d'ancrage s'étendant sur une partie de la longueur du corps, en saillie autour de la surface extérieure de celui-ci, le corps et le talon étant réalisés en une seule pièce en matière élastomère d'une dureté d'environ 67° Shore. Malgré cette dureté, qui nécessite des efforts d'emboîtage importants du bout mâle dans l'emboîture, il est nécessaire de prévoir, dans la surface intérieure de l'emboîture, une butée sensiblement radiale pour retenir la garniture dans l'hypothèse où elle serait entraînée vers le fond de l'emboîture lors de l'insertion du bout mâle dans l'emboîture. Cette butée est à cet effet positionnée en avant de la gorge d'ancrage dans le sens allant vers le fond de l'emboîture mais naturellement eh arrière de l'extrémité libre du bout mâle en position d'insertion.

On connaît également, par le document DE GM 1 860 424, une garniture comportant un corps et un talon d'ancrage, ayant une partie « arrière » (si l'on se réfère au sens d'emboîtage du bout mâle dans l'emboîture) en caoutchouc dur pour le maintien en place de la garniture lors de l'emboîtage et une partie « avant » en caoutchouc souple dont la compression est destinée à assurer l'étanchéité de l'assemblage: Cependant, là encore, l'emboîture est munie d'une butée interne pour retenir la garniture ; en outre, l'emboîtage nécessite tout d'abord de comprimer la partie en caoutchouc dur, donc des efforts d'emboîtage importants.

On connaît aussi, par le document US 2 953 398, une garniture composite en élastomère, renforcée sur une partie arrière de son pourtour (avec la même convention de sens que précédemment) pour lui conférer une rigidité suffisante pour empêcher son entraînement axial et comportant des canaux ou des évidements internes pour améliorer sa souplesse, lors de l'emboîtage. Bien que cette garniture soit rigidifiée, notamment dans sa partie d'ancrage, son maintien en place n'est pas garanti et l'emboîture est là encore munie d'une butée interne pour empêcher son refoulement vers le fond de l'emboîture lors de l'introduction du bout mâle. De plus, l'emboîtage reste difficile par suite du renforcement de la garniture sur une partie importante de son pourtour et plus particulièrement de sa surface intérieure venant en contact étanche avec le bout mâle.

On connaît en outre, par le document FR 2 512 917, une garniture à compression radiale en matériau mono-dureté, munie d'alvéoles parallélépipédiques à section carrée. Bien que les alvéoles confèrent à la garniture une plus grande souplesse, permettant de limiter les efforts d'emboîtage, cette solution reste insuffisante car la garniture n'étant pas rigidifiée, elle nécessite l'utilisation d'un élastomère relativement dur pour assurer l'ancrage, la dureté de l'élastomère augmentant les efforts d'emboîtage.

Une garniture selon le préambule de la revendication indépendante est connue par le document FR 1 149 513.

L'invention a pour but de remédier à ces inconvénients et concerne à cette fin une garniture d'étanchéité annulaire destinée à être insérée et comprimée radialement entre la surface extérieure d'un bout mâle d'un premier élément tubulaire et la surface intérieure de l'emboîture d'un deuxième élément tubulaire, cette garniture comportant un corps d'étanchéité annulaire déformable élastiquement adapté pour être enfilé autour de la surface extérieure du bout mâle et un talon d'ancrage adapté pour venir se loger dans une gorge d'ancrage ménagée dans la surface intérieure de l'emboîture, le corps étant délimité par deux surfaces d'extrémité axiale reliées par une surface extérieure et par une surface intérieure d'étanchéité et le talon d'ancrage s'étendant seulement sur une partie de la longueur du corps, en saillie radiale autour de la surface extérieure de celui-ci, et au moins toute la surface libre extérieure du talon étant en une matière de renforcement présentant une dureté supérieure à celle du corps, garniture caractérisée en ce que la matière de renforcement est située radialement à distance de la surface intérieure du corps d'étanchéité.

Grâce à cette caractéristique, la matière de renforcement n'a aucun contact avec le bout mâle dont la surface extérieure, lors de l'emboîtage, vient en contact uniquement avec la surface intérieure du corps d'étanchéité ; ce dernier étant réalisé en une matière souple aisément compressible, les efforts d'emboîtage se trouvent ainsi notablement limités.

De plus, le talon d'ancrage étant rigidifié par une matière de renforcement de dureté supérieure à celle du corps souple, la garniture est alors ancrée efficacement dans l'emboîture sans qu'il soit nécessaire de prévoir de surface de butée supplémentaire dans la surface intérieure de l'emboîture. La retenue du talon dans la gorge d'ancrage de l'emboîture est par ailleurs efficace dans les deux sens axiaux, c'est-à-dire aussi bien lors de l'introduction du bout mâle, où l'entraînement de la garniture vers le fond de l'emboîture est empêché, que lors de la mise en pression où l'expulsion de la garniture vers l'extérieur de l'emboîture, sous l'effet de forces tendant à séparer les éléments tubulaires, est empêchée.

Selon les revendications dépendantes, la garniture peut en outre présenter une ou plusieurs des caractéristiques suivantes :
- le talon d'ancrage s'étend axialement exclusivement entre les deux surfaces d'extrémité axiale du corps, ces deux surfaces d'extrémité étant des surfaces libres ;
- la totalité du talon est en une matière de renforcement présentant une dureté supérieure à celle du corps ;
- le talon comporte une partie formant âme, faite de la même matière que le corps et une partie de renforcement qui est en une matière présentant une dureté supérieure à celle du corps et qui constitue une partie formant enveloppe pour le talon ;
- la partie formant enveloppe comporte des ailettes ;
- les ailettes s'étendent radialement dans la partie formant âme ;
- les ailettes sont inclinées dans l'âme ;
- la matière de renforcement présentant une dureté supérieure à celle du corps a également une température de fusion supérieure à celle du corps ;
- le corps est en une matière élastomère ou polymère élastomérique ;
- le corps est en une matière présentant une dureté comprise dans la gamme de 40° Shore à 60° Shore.
- la matière de renforcement présentant une dureté supérieure à celle du corps est une matière synthétique ;
- la matière synthétique est une matière thermoplastique ;
- la matière thermoplastique est un polyamide ;
- le corps comporte des alvéoles ;
- les alvéoles sont en forme de tronc de pyramide ;
- les troncs de pyramide ont une section transversale en losange ;
- une partie de la surface extérieure du corps est une surface d'étanchéité ;
- le corps présente, lorsqu'il n'est pas soumis à une contrainte extérieure, une surface extérieure de forme générale cylindrique ;
- le corps présente, lorsqu'il n'est pas soumis à une contrainte, une surface intérieure tronconique ;
- le corps présente, lorsqu'il n'est pas soumis à une contrainte, au moins une surface d'extrémité tronconique ;
- le corps comporte au moins une surface d'extrémité dans laquelle débouchent des alvéoles creusées dans le corps ; et
- le talon a une section longitudinale présentant une forme générale en trapèze.

Des caractéristiques supplémentaires et avantages de l'invention ressortiront de la description qui va suivre, de formes de réalisation de l'invention données à titre d'exemples non limitatifs et illustrées par les dessins joints dans lesquels :
- la figure 1 est une section longitudinale schématique d'une partie d'une garniture selon l'invention dans une première forme de réalisation,
- la figure 2 est une section longitudinale schématique d'une partie d'un assemblage télescopique de deux éléments de canalisation étanchés par la garniture de la figure 1,
- la figure 3 est une vue partielle de face de la garniture de la figure 1,
- la figure 4 est une vue partielle de face montrant des détails de la garniture de la figure 1,
- la figure 5 est une section longitudinale schématique d'une partie d'une garniture selon l'invention dans une deuxième forme de réalisation, et
- la figure 6 est une section partielle de la garniture de la figure 5 selon la ligne VI-VI de cette figure.

Les garnitures annulaires illustrées par les figures sont destinées à étancher, dans un circuit de fluide, un assemblage télescopique de régions d'extrémité respectives de deux éléments tubulaires emboîtées l'une dans l'autre ; ces deux éléments tubulaires peuvent être par exemple des tuyaux cylindriques d'évacuation d'eaux usées dont l'un a une extrémité formant bout mâle et l'autre a une extrémité sous la forme d'une tulipe d'emboîtement formant bout femelle ou emboîture, et bien que cela ne soit pas obligatoire, c'est cet exemple qui sera choisi pour la présente description afin de simplifier celle-ci.

Le premier tuyau 1 présente ainsi une région d'extrémité formant bout mâle 10 qui est destinée à être emboîtée dans une région d'extrémité du deuxième tuyau 2 formant emboîture 20. Dans l'exemple choisi, les tuyaux 1, 2 sont parcourus intérieurement par des canaux longitudinaux respectifs approximativement de même diamètre.

Le bout mâle 10 du premier tuyau 1, destiné à être emboîté dans l'emboîture 20 du deuxième tuyau 2, présente une surface extérieure de forme générale cylindrique 11 à section droite circulaire qui est approximativement lisse, munie à son extrémité libre d'un tronçon chanfreiné 12.

L'emboîture 20 dans laquelle est destiné à être emboîté le bout mâle 10 a une surface intérieure comportant un fond constitué par un épaulement 21 sensiblement radial destiné à servir de butée à l'extrémité libre du bout mâle, et en allant vers l'extrémité libre de l'emboîture, un premier tronçon tronconique 22 s'évasant vers cette extrémité libre et de conicité approximativement égale à celle du tronçon chanfreiné 12, un deuxième tronçon tronconique 23 s'évasant également vers cette extrémité mais de conicité légèrement plus faible, un tronçon cylindrique 24, et une succession de tronçons (tronconique, cylindrique, tronconique) formant une gorge 25 s'étendant à partir du tronçon cylindrique 24 d'une part vers la paroi périphérique extérieure de l'emboîture 20 et d'autre part vers son extrémité libre sans atteindre celle-ci ; la gorge 25 aboutit à un épaulement à peu près radial 26 à partir duquel s'étendent, en allant vers l'extrémité libre de l'emboîture 20, un tronçon cylindrique 27 et un tronçon tronconique 28 s'évasant vers cette extrémité libre ; le tronçon tronconique de la gorge 25 qui s'étend depuis le tronçon cylindrique 24 a une très grande conicité et constitue presque un épaulement, tandis que le tronçon tronconique opposé, qui aboutit à l'épaulement 26, est incliné environ à 40 degrés.

Les diamètres du deuxième tronçon tronconique 23 et du tronçon cylindrique 24 sont notablement plus grands que celui de la surface extérieure 11 du bout mâle 10 de manière à constituer une chambre pour l'insertion de la garniture d'étanchéité, tandis que le diamètre du tronçon cylindrique 27 est à peine supérieur de manière à empêcher l'éjection de celle-ci lors de la mise sous pression de fluide de l'assemblage.

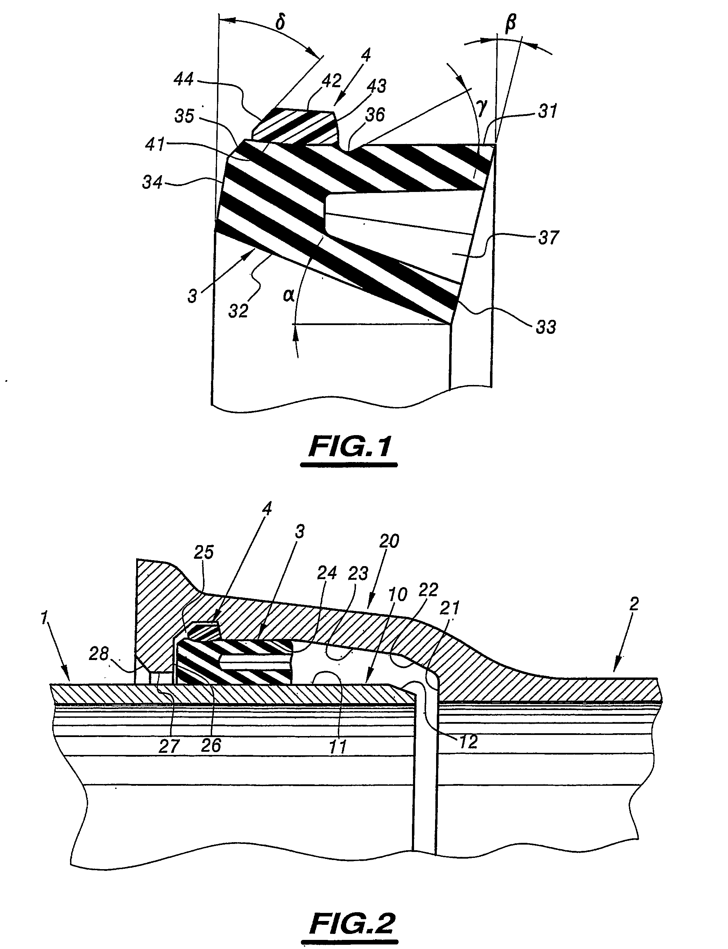

La garniture annulaire illustrée par les figures 1 à 4 et dont la figure 1 montre schématiquement une partie en coupe longitudinale, en l'absence de toute contrainte extérieure comporte un corps annulaire d'étanchéité 3 déformable élastiquement, adapté pour être enfilé autour de la surface extérieure du bout mâle 10 et un talon annulaire d'ancrage 4 s'étendant seulement sur une partie de la longueur du corps 3, en saillie radiale autour de la surface extérieure de celui-ci.

Plus précisément, le corps annulaire 3 présente une surface extérieure 31 de forme générale approximativement cylindrique dont une partie assure l'étanchéité avec la surface intérieure de l'emboîture 20 et dont le diamètre est sensiblement égal à celui du tronçon cylindrique 24 de la surface intérieure de l'emboîture, et une surface intérieure 32 tronconique inclinée d'un angle α d'environ 20 degrés par rapport à la direction dans laquelle s'étend la surface extérieure, cette surface intérieure 32 du corps 3 constituant également la surface intérieure de la garniture ; la surface extérieure et la surface intérieure sont reliées par des surfaces annulaires d'extrémité axiale 33, 34 tronconiques très inclinées, dans le même sens, par rapport à la surface extérieure 31 ; le sens d'inclinaison de ces surfaces d'extrémité 33, 34 est tel qu'en section longitudinale, les angles de l'une 33 des surfaces d'extrémité respectivement avec la surface extérieure 31 et avec la surface intérieure 32 sont deux angles aigus tandis que les angles de l'autre surface d'extrémité 34 respectivement avec la surface extérieure 31 et avec la surface intérieure 32 sont deux angles obtus, le premier de ces angles obtus étant cependant abattu par un chanfrein 35 ; à titre indicatif, l'angle β de la surface d'extrémité 33 définissant des angles aigus, avec le plan perpendiculaire à la surface extérieure, est d'environ 10 degrés ; la surface extérieure 31 comporte, approximativement à mi-longueur, une gorge 36 annulaire présentant du côté des angles obtus une paroi arrondie, et du côté des angles aigus une paroi tronconique inclinée d'un angle γ d'environ 27 degrés par rapport à la surface extérieure.

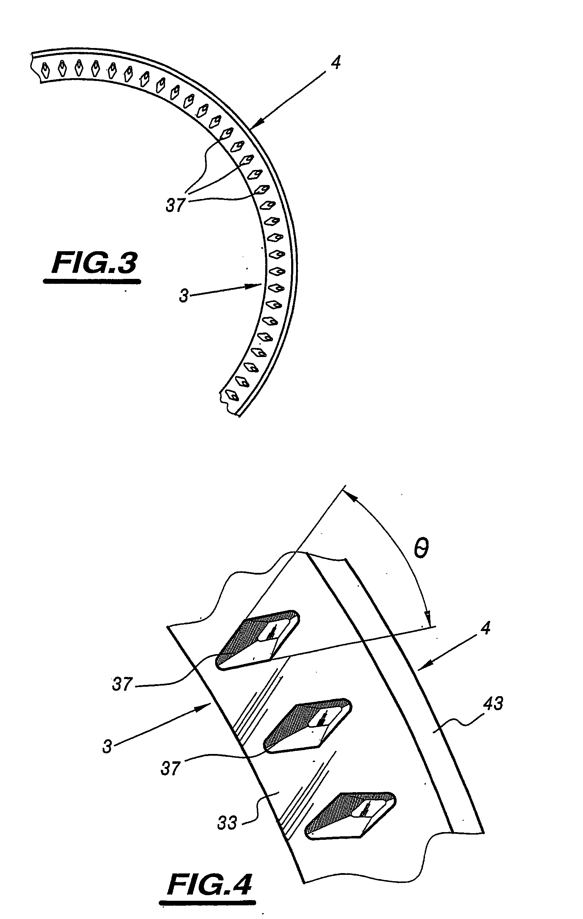

Le talon annulaire d'ancrage 4 est solidarisé au corps 3 entre la gorge 36 et le chanfrein 35, dans une zone du corps 3 légèrement concave. Le talon 4 est donc situé entièrement à distance de la surface intérieure d'étanchéité 32 et s'étend en saillie radiale externe autour de la surface extérieure 31 du corps 3 ; axialement, le talon 4 s'étend entre les deux surfaces d'extrémité axiale 33, 34 du corps souple 3, ces surfaces d'extrémité étant des surfaces libres, c'est-à-dire des surfaces non recouvertes par un autre matériau. Par suite de la présence du talon d'ancrage 4, le corps 3 peut être constitué en une matière élastiquement déformable telle qu'un élastomère ou un polymère élastomérique relativement souple, de dureté comprise entre 40° et 60° Shore (de préférence environ 50° Shore). Pour augmenter encore la souplesse du corps, il est possible de réaliser celui-ci muni d'alvéoles 37 débouchant dans la surface annulaire d'extrémité 33 ; ces alvéoles peuvent être réparties dans cette surface d'extrémité sur une circonférence s'étendant approximativement à égale distance de la surface extérieure 31 et de la surface intérieure 32 ; chaque alvéole 37 présente ici une forme en tronc de pyramide à section transversale approximativement en losange dont la grande diagonale s'étend radialement par rapport au corps 3, tronc de pyramide dont les arêtes correspondant à cette diagonale sont approximativement parallèles aux génératrices respectivement de la surface extérieure 31 et de la surface intérieure 32 et convergent en direction de la surface d'extrémité 34 présentant un chanfrein 35. De préférence, les diagonales du losange de la section transversale des alvéoles sont telles que la grande diagonale radiale constituant la hauteur du losange est supérieure au double de la petite diagonale constituant sa largeur, ce qui permet de répartir de manière uniforme la compression radiale du corps 3 sur tout le pourtour et ainsi d'aboutir à un serrage uniforme et étanche du corps 3 sur le bout mâle 10, et plus particulièrement au droit des diagonales radiales des losanges ; les sommets du losange sont légèrement arrondis pour ne pas générer d'arête de tronc de de pyramide vive, susceptible de conduire au déchirement du corps ; l'angle aigu θ formé par les côtés du losange est d'environ 45 degrés (figures 3 et 4).

Le talon annulaire d'ancrage 4 a une section longitudinale présentant une forme générale en trapèze dont la grande base 41, légèrement convexe, est solidarisée au corps 3 par la zone concave de celui-ci s'étendant entre la gorge 36 et le chanfrein 35, et la petite base 42 est approximativement parallèle aux génératrices de la surface extérieure 31, de telle manière que la surface extérieure du talon 4 est approximativement cylindrique. Les côtés inclinés du trapèze sont un côté 43 légèrement convexe présentant approximativement la même inclinaison que le tronçon tronconique de la gorge 25 de l'emboîture 20 s'étendant du côté du tronçon cylindrique 24 de celle-ci, et un côté 44 situé du côté du chanfrein 35 et incliné d'un angle δ d'environ 40° par rapport au plan perpendiculaire à la surface extérieure 31 du corps 3. La bague pleine constituant le talon d'ancrage 4 est en matière synthétique de renforcement, par exemple un thermoplastique tel qu'un polyamide, adhéré à la matière souple constituant le corps 3, ayant une température de fusion supérieure à celle de cette matière souple. La bague doit être cependant suffisamment souple pour permettre la déformation de la garniture (et ainsi sa propre déformation) lors de la mise en place de la garniture dans l'emboîture ; cette bague peut comporter une ou plusieurs encoches (non représentées) pour améliorer sa déformabilité.

Pour fabriquer la garniture, on place la bague destinée à constituer le talon 4 au fond d'un moule dont la forme correspond à celle désirée pour la garniture, puis on injecte de l'élastomère dans le moule ; comme la température de fusion du matériau constituant la bague est supérieure à celle de l'élastomère, la bague ne fond pas lors du moulage par injection du corps et adhère à l'élastomère.

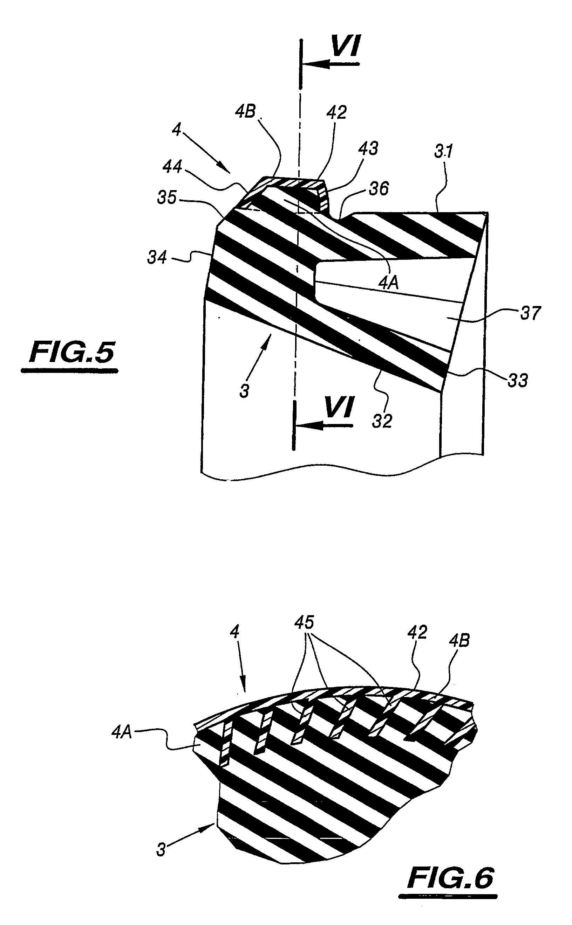

En variante (figures 5 et 6), le talon annulaire d'ancrage 4 a approximativement le même aspect extérieur que celui des figures 1 à 4 mais est constitué en deux parties, à savoir une âme 4A en une seule pièce avec le corps 3 et fait de la même matière, donc en élastomère, et une enveloppe 4B faite de la même matière que le talon 4 de la forme de réalisation des figures 1 à 4 ; de préférence, l'enveloppe 4B comporte des ailettes 45 s'étendant dans l'élastomère de l'âme 4A, de manière à conférer au talon la rigidité nécessaire à son maintien dans la gorge 25 de l'emboîture tout en lui conservant une souplesse suffisante pour permettre une déformation convenable de la garniture lors de sa mise en place dans la chambre définie entre le bout mâle 10 et l'emboîture 20, ces ailettes s'étendant par exemple radialement, ou encore de manière inclinée (figure 6) par rapport à la direction radiale pour faciliter l'écrasement du talon quand la gorge 25 présente un volume trop confiné. Le talon présentant la même forme extérieure que sur les figures 1 à 4, l'enveloppe 4B comporte donc, outre les ailettes 45, une paroi cylindrique correspondant à la petite base 42 du trapèze, s'étendant entre deux parois tronconiques correspondant aux côtés inclinés 43, 44.

Naturellement, les formes décrites plus haut sont celles, en l'absence d'indication contraire, d'une garniture qui n'est soumise à aucune contrainte extérieure.

Pour réaliser l'assemblage, on introduit la garniture dans l'emboîture 20, en l'absence du bout mâle 10, par l'extrémité libre de l'emboîture, et pour cela on déforme la garniture de manière à pouvoir introduire le talon 4 dans la gorge 25 de l'emboîture 20. Puis, on introduit le bout mâle 10 dans l'ensemble, à force, de manière à déformer le corps 3 de la garniture afin que sa surface intérieure 32 prenne une forme cylindrique coaxiale à sa surface extérieure 31, et soit plaquée contre la surface extérieure 11 du bout mâle 10 tandis que la surface extérieure 31 de la garniture est plaquée contre le tronçon cylindrique 24 de la surface intérieure de l'emboîture, ce qui assure l'étanchéité entre les tuyaux 1, 2.

La rigidification du seul talon d'ancrage par un matériau synthétique éloigné de la surface intérieure de la garniture, et donc de la surface extérieure du bout mâle, permet de limiter les efforts d'emboîtage et assure le maintien en place du talon dans sa gorge d'ancrage de l'emboîture ; de plus, le fait que toute la surface libre extérieure du talon d'ancrage soit en une matière de renforcement évite l'entraînement de la garniture vers le fond de l'emboîture lors de l'introduction du bout mâle ainsi que l'éjection de la garniture vers l'extérieur de l'emboîture sous l'action de la pression du fluide circulant dans les tuyaux.

En outre, grâce à l'efficacité de l'ancrage conférée par la garniture composite selon l'invention, il est possible de s'affranchir de la butée en fond d'emboîture, ce qui permet de raccourcir l'emboîture et ainsi de réaliser un gain en matière, ici en fonte, sur les tuyaux.

Les alvéoles 37 ménagées dans le corps 3 confèrent à la garniture une souplesse accrue et diminuent encore davantage les efforts d'emboîtage.

Des essais comparatifs entre une garniture telle que celle représentée sur la figure 1 et une garniture de même géométrie entièrement en élastomère confirment que la combinaison d'un talon d'ancrage en matériau synthétique (permettant l'utilisation, pour le corps d'étanchéité, d'un élastomère ou un polymère élastomérique souple) avec un corps alvéolé réduit considérablement les efforts d'emboîtage, notamment en cas de très faible jeu entre le bout mâle lisse 10 et l'emboîture 20, ce qui permet d'utiliser un bout mâle à l'extrémité libre seulement légèrement chanfreinée ou même sans chanfrein.

En outre :
- les alvéoles favorisent l'effet autoclave de la garniture sous l'action de la pression interne du fluide circulant dans la canalisation, car la garniture a alors un comportement se rapprochant de celui d'un joint à lèvres, la pression de fluide qui pénètre dans les alvéoles plaquant l'élastomère contre la surface externe du bout mâle d'autant plus fortement que la pression est élevée, ce qui garantit d'excellentes performances aux pressions internes élevées (plus de 50 bars) ; de plus, grâce à l'effet autoclave, la garniture remplit sa fonction d'étanchéité même lorsque la pression interne est faible, contrairement à une garniture à corps de compression non évidé de même nature soumise à un taux de compression identique et utilisée pour un jeu identique entre les éléments tubulaires assemblés.
- la forme pyramidale des alvéoles permet d'avoir moins d'élastomère à comprimer dans la partie du corps de compression proche du fond de l'emboîture , par rapport aux alvéoles parallélépipédiques, ce qui contribue à diminuer encore les efforts d'emboîtage ;
- les alvéoles améliorent la moulabilité de la garniture, car les temps du cycle de refroidissement de l'élastomère lors du procédé de moulage sont réduits en raison du volume plus faible de l'élastomère à refroidir, ce qui permet de diminuer les coûts de fabrication ;
- les alvéoles facilitent la pré-lubrification en usine de la surface intérieure tronconique de la garniture venant au contact du bout mâle lors de l'emboîtage et ce au moyen d'un matériau à fort pouvoir lubrifiant et à bas coefficient de frottement compatible avec l'élastomère, par exemple de la graisse silicone ou du polytétrafluoroéthylène pour des canalisations d'assainissement, déposé sous la forme d'un film d'une épaisseur de quelques micromètres ;
- grâce aux alvéoles, la pression spécifique au niveau du film de lubrifiant est réduite lors de l'emboîtage du bout mâle, ce qui évite l'arrachement du film ; en l'absence d'alvéoles, il serait nécessaire à un opérateur de graisser la garniture et le bout mâle sur chantier, dans la fouille (ce qui est peu commode et dangereux pour l'opérateur), à l'aide de graisse en pot traditionnelle, avec toutes les difficultés que cela implique notamment à cause de détritus pouvant s'incorporer dans le film de graisse.

## Revendications

1. Garniture d'étanchéité annulaire destinée à être insérée et comprimée radialement entre la surface extérieure d'un bout mâle (10) d'un premier élément tubulaire (1) et la surface intérieure de l'emboîture (20) d'un deuxième élément tubulaire (2), cette garniture comportant un corps d'étanchéité annulaire (3) déformable élastiquement adapté pour être enfilé autour de la surface extérieure du bout mâle (10) et un talon d'ancrage (4) adapté pour venir se loger dans une gorge d'ancrage (25) ménagée dans la surface intérieure de l'emboîture (20), le corps (3) étant délimité par deux surfaces d'extrémité axiale (33, 34) reliées par une surface extérieure (31) et par une surface intérieure d'étanchéité (32) et le talon d'ancrage (4) s'étendant seulement sur une partie de la longueur du corps (3), en saillie radiale autour de la surface extérieure (31) de celui-ci, et au moins toute la surface libre extérieure du talon (4) étant en une matière de renforcement présentant une dureté supérieure à celle du corps (3), garniture **caractérisée en ce que** la matière de renforcement est située radialement à distance de la surface intérieure (32) du corps d'étanchéité (3).

2. Garniture selon la revendication 1, **caractérisée en ce que** le talon d'ancrage (4) s'étend axialement exclusivement entre les deux surfaces d'extrémité axiale (33, 34) du corps (3), ces deux surfaces d'extrémité (33, 34) étant des surfaces libres.

3. Garniture selon la revendication 1 ou 2, **caractérisée en ce que** la totalité du talon (4) est en une matière de renforcement présentant une dureté supérieure à celle du corps (3).

4. Garniture selon la revendication 1 ou 2, **caractérisée en ce que** le talon (4) comporte une partie (4A) formant âme, faite de la même matière que le corps (3) et une partie (4B) de renforcement qui est en une matière présentant une dureté supérieure à celle du corps (3), et qui constitue une partie formant enveloppe pour le talon.

5. Garniture selon la revendication 4, **caractérisée en ce que** la partie formant enveloppe (4B) comporte des ailettes (45).

6. Garniture selon la revendication 5, **caractérisée en ce que** les ailettes (45) s'étendent radialement dans la partie (4A) formant âme.

7. Garniture selon la revendication 5, **caractérisée en ce que** les ailettes (45) sont inclinées dans l'âme (4A).

8. Garniture selon l'une quelconque des revendications 1 à 7, **caractérisée en ce que** la matière de renforcement présentant une dureté supérieure à celle du corps (3) a également une température de fusion supérieure à celle du corps.

9. Garniture selon l'une quelconque des revendications 1 à 8, **caractérisée en ce que** le corps (3) est en une matière élastomère ou polymère élastomérique.

10. Garniture selon l'une quelconque des revendications 1 à 9, **caractérisée en ce que** le corps (3) est en une matière présentant une dureté comprise dans la gamme de 40° Shore à 60° Shore.

11. Garniture selon l'une quelconque des revendications 1 à 10, **caractérisée en ce que** la matière de renforcement présentant une dureté supérieure à celle du corps est une matière synthétique.

12. Garniture selon la revendication 11, **caractérisée en ce que** la matière synthétique est une matière thermoplastique.

13. Garniture selon la revendication 12, **caractérisée en ce que** la matière thermoplastique est un polyamide.

14. Garniture selon l'une quelconque des revendications 1 à 13, **caractérisée en ce que** le corps (3) comporte des alvéoles (37).

15. Garniture selon la revendication 14, **caractérisée en ce que** les alvéoles sont en forme de tronc de pyramide.

16. Garniture selon la revendication 15, **caractérisée en ce que** les troncs de pyramide ont une section transversale en losange.

17. Garniture selon l'une quelconque des revendications 1 à 16, **caractérisée en ce qu'**une partie de la surface extérieure (31) du corps (3) est une surface d'étanchéité.

18. Garniture selon l'une quelconque des revendications 1 à 17, **caractérisée en ce que** le corps (3) présente, lorsqu'il n'est pas soumis à une contrainte extérieure, une surface extérieure (31) de forme générale cylindrique.

19. Garniture selon l'une quelconque des revendications 1 à 18, **caractérisée en ce que** le corps (3) présente, lorsqu'il n'est pas soumis à une contrainte, une surface intérieure (32) tronconique.

20. Garniture selon l'une quelconque des revendications 1 à 19, **caractérisée en ce que** le corps (3) présente, lorsqu'il n'est pas soumis à une contrainte, au moins une surface d'extrémité (33, 34) tronconique.

21. Garniture selon la revendication 20, **caractérisée en ce que** le corps (3) comporte au moins une surface d'extrémité (33) dans laquelle débouchent des alvéoles (37) creusées dans le corps.

22. Garniture selon l'une quelconque des revendications 1 à 21, **caractérisée en ce que** le talon (4) a une section longitudinale présentant une forme générale en trapèze.

## Patentansprüche

1. Ringförmige Dichtung, die dazu bestimmt ist, zwischen die Außenfläche eines Einsteckendes (10) eines ersten rohrförmigen Elements (1) und die Innenfläche der Steckmuffe (20) eines zweiten rohrförmigen Elements (2) eingeschoben und radial zusammengedrückt zu werden, wobei diese Dichtung einen elastisch verformbaren, ringförmigen Dichtungskörper (3), der ausgelegt ist, um um die Außenfläche des Einsteckendes (10) herum aufgeschoben zu werden, und einen Verankerungsabsatz (4) aufweist, der ausgelegt ist, um sich in eine Verankerungskehle (25) einzufügen, die in der Innenfläche der Steckmuffe (20) ausgebildet ist, wobei der Körper (3) von zwei axialen Endflächen (33, 34) begrenzt wird, die durch eine Dichtungsaußenfläche (31) und durch eine Dichtungsinnenfläche (32) miteinander verbunden werden, und der Verankerungsabsatz (4) sich nur über einen Teil der Länge des Körpers (3) radial um dessen Außenfläche (31) vorstehend erstreckt, und mindestens die ganze freie Außenfläche des Absatzes (4) aus einem Verstärkungsmaterial besteht, das eine größere Härte als der Körper (3) aufweist, wobei die Dichtung **dadurch gekennzeichnet ist, dass** das Verstärkungsmaterial sich radial in Abstand zur Innenfläche (32) des Dichtungskörpers (3) befindet.

2. Dichtung nach Anspruch 1, **dadurch gekennzeichnet, dass** der Verankerungsabsatz (4) sich axial ausschließlich zwischen den beiden axialen Endflächen (33, 34) des Körpers (3) erstreckt, wobei diese beiden Endflächen (33, 34) freie Flächen sind.

3. Dichtung nach Anspruch 1 oder 2, **dadurch gekennzeichnet, dass** die Gesamtheit des Absatzes (4) aus einem Verstärkungsmaterial ist, das eine größere Härte aufweist als dasjenige des Körpers (3).

4. Dichtung nach Anspruch 1 oder 2, **dadurch gekennzeichnet, dass** der Absatz (4) einen Bereich (4A), der einen Kern bildet und aus dem gleichen Material wie der Körper (3) besteht, und einen Verstärkungsbereich (4B) aufweist, der aus einem Material ist, das eine größere Härte als dasjenige des Körpers (3) aufweist und der einen Bereich darstellt, der eine Hülle für den Absatz bildet.

5. Dichtung nach Anspruch 4, **dadurch gekennzeichnet, dass** der eine Hülle bildende Bereich (4B) Rippen (45) aufweist.

6. Dichtung nach Anspruch 5, **dadurch gekennzeichnet, dass** die Rippen (45) sich radial in dem einen Kern bildenden Bereich (4A) erstrecken.

7. Dichtung nach Anspruch 5, **dadurch gekennzeichnet, dass** die Rippen (45) im Kern (4A) geneigt sind.

8. Dichtung nach einem der Ansprüche 1 bis 7, **dadurch gekennzeichnet, dass** das eine größere Härte als diejenige des Körpers (3) aufweisende Verstärkungsmaterial auch eine höhere Schmelztemperatur hat als diejenige des Körpers.

9. Dichtung nach einem der Ansprüche 1 bis 8, **dadurch gekennzeichnet, dass** der Körper (3) aus einem Elastomermaterial oder einem Elastomerpolymer ist.

10. Dichtung nach einem der Ansprüche 1 bis 9, **dadurch gekennzeichnet, dass** der Körper (3) aus einem Material besteht, das eine Härte aufweist, die im Bereich von 40° Shore bis 60° Shore liegt.

11. Dichtung nach einem der Ansprüche 1 bis 10, **dadurch gekennzeichnet, dass** das eine größere Härte als diejenige des Körpers aufweisende Verstärkungsmaterial ein Synthetikmaterial ist.

12. Dichtung nach Anspruch 11, **dadurch gekennzeichnet, dass** das Synthetikmaterial ein thermoplastisches Material ist.

13. Dichtung nach Anspruch 12, **dadurch gekennzeichnet, dass** das thermoplastische Material ein Polyamid ist.

14. Dichtung nach einem der Ansprüche 1 bis 13, **dadurch gekennzeichnet, dass** der Körper (3) Aushöhlungen (37) aufweist.

15. Dichtung nach Anspruch 14, **dadurch gekennzeichnet, dass** die Aushöhlungen die Form eines Pyramidenstumpfs haben.

16. Dichtung nach Anspruch 15, **dadurch gekennzeichnet, dass** die Pyramidenstümpfe einen rautenförmigen Querschnitt haben.

17. Dichtung nach einem der Ansprüche 1 bis 16, **dadurch gekennzeichnet, dass** ein Bereich der Außenfläche (31) des Körpers (3) eine Dichtungsfläche ist.

18. Dichtung nach einem der Ansprüche 1 bis 17, **dadurch gekennzeichnet, dass** der Körper (3), wenn er keiner äußeren Beanspruchung unterworfen ist, eine Außenfläche (31) von allgemein zylindrischer Form aufweist.

19. Dichtung nach einem der Ansprüche 1 bis 18, **dadurch gekennzeichnet, dass** der Körper (3), wenn er keiner äußeren Beanspruchung unterworfen ist, eine kegelstumpfförmige Innenfläche (32) aufweist.

20. Dichtung nach einem der Ansprüche 1 bis 19, **dadurch gekennzeichnet, dass** der Körper (3), wenn er keiner äußeren Beanspruchung unterworfen ist, mindestens eine kegelstumpfförmige Endfläche (33, 34) aufweist.

21. Dichtung nach Anspruch 20, **dadurch gekennzeichnet, dass** der Körper (3) mindestens eine Endfläche (33) aufweist, in die Aushöhlungen (37) münden, die im Körper ausgebildet sind.

22. Dichtung nach einem der Ansprüche 1 bis 21, **dadurch gekennzeichnet, dass** der Absatz (4) einen allgemein trapezförmigen Längsschnitt hat.

## Claims

1. Annular seal intended to be inserted and radially compressed between the outer surface of a male end (10) of a first tubular element (1) and the inner surface of the socket (20) of a second tubular element (2), this seal having an elastically deformable annular seal body (3) designed to be threaded around the outer surface of the male end (10) and an anchoring lug (4) designed to be housed in an anchoring groove (25) disposed in the inner surface of the socket (20), the body (3) being delimited by two axial end surfaces (33, 34) connected by an outer surface (31) and by an inner seal surface (32) and the anchoring lug (4) only extending over a portion of the length of the body (3), projecting radially around the outer surface (31) of said body, and at least all of the free outer surface of the lug (4) being made of a reinforcing material having a hardness greater than that of the body (3), seal **characterised in that** the reinforcing material is situated radially at a distance from the inner surface (32) of the seal body (3).

2. Seal according to claim 1, **characterised in that** the anchoring lug (4) extends axially exclusively between the two axial end surfaces (33, 34) of the body (3), these two end surfaces (33, 34) being free surfaces.

3. Seal according to either claim 1 or claim 2, **characterised in that** all of the lug (4) is made of a reinforcing material having a hardness greater than that of the body (3).

4. Seal according to either claim 1 or claim 2, **characterised in that** the lug (4) has one part (4A) forming a core, made of the same material as the body (3), and one reinforcing part (4B) that is made of a material having a hardness greater than that of the body (3) and constitutes an envelope-forming part for the lug.

5. Seal according to claim 4, **characterised in that** the envelope-forming part (4B) has vanes (45).

6. Seal according to claim 5, **characterised in that** the vanes (45) extend radially into the core-forming part (4A).

7. Seal according to claim 5, **characterised in that** the vanes (45) are tilted inside the core (4A).

8. Seal according to any one of claims 1 to 7, **characterised in that** the reinforcing material having a hardness greater than that of the body (3) also has a melting point higher than that of the body.

9. Seal according to any one of claims 1 to 8, **characterised in that** the body (3) is made of an elastomer material or elastomeric polymer.

10. Seal according to any one of claims 1 to 9, **characterised in that** the body (3) is made of a material having a hardness within the range of 40° Shore to 60° Shore.

11. Seal according to any one of claims 1 to 10, **characterised in that** the reinforcing material having a hardness greater than that of the body is a synthetic material.

12. Seal according to claim 11, **characterised in that** the synthetic material is a thermoplastic material.

13. Seal according to claim 12, **characterised in that** the thermoplastic material is a polyamide.

14. Seal according to any one of claims 1 to 13, **characterised in that** the body (3) has cells (37).

15. Seal according to claim 14, **characterised in that** the cells are in the shape of a truncated pyramid.

16. Seal according to claim 15, **characterised in that** the truncated pyramids have a rhomboidal cross section.

17. Seal according to any one of claims 1 to 16, **characterised in that** one part of the outer surface (31) of the body (3) is a sealing surface.

18. Seal according to any one of claims 1 to 17, **characterised in that** the body (3), when it is not subject to exterior stress, has an outer surface (31) of gen-erally cylindrical shape.

19. Seal according to any one of claims 1 to 18, **characterised in that** the body (3), when it is not subject to stress, has a conical inner surface (32).

20. Seal according to any one of claims 1 to 19, **characterised in that** the body (3), when it is not subject to stress, has at least one conical end surface (33, 34).

21. Seal according to claim 20, **characterised in that** the body (3) has at least one end surface (33) into which the hollow cells (37) in the body open out.

22. Seal according to any one of claims 1 to 21, **characterised in that** the lug (4) has a generally trapezoidal longitudinal section.
